# FASCICULE DE BREVET EUROPEEN

(11) **EP 0 524 075 B1**
(45) Date de publication et mention de la délivrance du brevet: **19.02.1997**
(21) Numéro de dépôt: 92402015.9
(22) Date de dépôt: 10.07.1992
(51) Int. Cl.: C11D 3/48, C11D 1/722, A01N 59/26

(54) **Composition acide désinfectante à propriétés détergentes et détartrantes et procédé pour sa mise en oeuvre**
Saures, desinfizierendes und Kesselstein entfernendes Reinigungsmittel und Verfahren zu seiner Herstellung
Acid disinfectant and scale removing clearing agent and process for its preparation

(30) Priorité: 15.07.1991 FR 9108887; 06.05.1992 FR 9205598
(43) Date de publication de la demande: 20.01.1993
(73) Titulaire: CFPI INDUSTRIES, 92233 Gennevilliers (FR)
(72) Inventeur: Schapira, Joseph, F-75015 Paris (FR); Vincent, Jacques, F-78750 Mareil Marly (FR); Gamet, Jean-Claude, F-18400 St Florent/Cher (FR); Geneix, Catherine, F-92000 Nanterre (FR); Caire, Brigitte, F-92700 Colombes (FR); Gabu, Catherine, F-93393 Clichy Sous Bois (FR)
(74) Mandataire: Koch, Gustave

(56) Documents cités:
- WO-A-83/00163
- DE-A- 1 937 682
- FR-A- 1 292 476
- FR-A- 2 490 928
- CHEMICAL ABSTRACTS, vol. 112, no. 6, 1990, page 143, abstract no. 101229t, Columbus, Ohio, US

## Description

L'invention a pour objet une composition acide désinfectante à propriétés détergentes et détartrantes.

La composition en question est plus particulièrement adaptée au nettoyage et à la désinfection des installations de l'industrie agroalimentaire, notamment de la brasserie et de la laiterie.

L'invention vise également un procédé pour le nettoyage des susdites installations.

Les installations concernées par la susdite composition comportent des circuits et des réservoirs qui, après un fonctionnement d'une certaine durée, sont souillés par des matières organiques, des graisses ou protéines, ou par des dépôts minéraux de sels de calcium, notamment des carbonates, phosphates et oxalates de calcium.

Il est usuel, dans le cas des installations du genre en question, de procéder successivement à l'enlèvement des susdites souillures à base de matières organiques, graisses ou protéines, et de dépôts minéraux de sels de calcium, puis de désinfecter lesdites installations avant de redémarrer le procédé de fabrication dans des conditions acceptables.

Pour des raisons de prix de revient, les opérations de nettoyage et de désinfection sont effectuées aux températures de fonctionnement des installations, c'est-à-dire à une température d'environ 10°C dans certaines canalisations et réservoirs d'installations de brasserie.

D'après les techniques de l'art antérieur, les opérations de nettoyage, d'une part, et de désinfection, d'autre part, sont effectuées en des étapes différentes l'une de l'autre, séparées par une étape de rinçage.

La durée totale d'une séquence de nettoyage-désinfection telle que mise en oeuvre selon l'état antérieur de la technique nécessite l'arrêt de l'installation pendant une durée importante qui peut être de 1 heure et demie à 2 heures.

Il existe déjà des compositions acides à base des acides phosphorique et/ou hydroxyacétique qui comportent un agent tensio-actif ainsi qu'un agent hydrotrope mais qui ne sont propres qu'au nettoyage des installations de l'industrie agroalimentaire en question, la désinfection desdites installations après nettoyage obligeant l'industriel à avoir recours à une composition désinfectante supplémentaire.

Le document WO 83/00163 décrit une composition désinfectante comprenant un acide gras à chaîne courte, de l'acide phosphorique, le n-octanesulfonate comme agent hydrotrope et éventuellement le nonylphénol polyéthoxylé et polypropoxylé.

Le document Chemical Abstracts, vol. 112 (1990) page 143, n° 101229t décrit un procédé en deux étapes avec rinçage intermédiaire, la deuxième étape prévoyant l'utilisation d'une composition comprenant de l'acide phosphorique et un agent tensio-actif mais pas d'agent hydrotrope.

L'invention a pour but, surtout, de fournir une composition acide du genre en question qui non seulement soit propre au nettoyage des installations de l'industrie agroalimentaire, mais qui soit également apte à réaliser la désinfection desdites installations, les deux opérations dont il est question étant ainsi réalisées en même temps et le rinçage intermédiaire supprimé.

Or, il se trouve que la Société Demanderesse a eu le mérite de montrer, à l'issue de recherches approfondies, qu'il était possible de réaliser simultanément les étapes de nettoyage et de désinfection des installations de l'industrie agroalimentaire et de supprimer ainsi l'étape de rinçage intermédiaire dès lors que, dans les compositions acides du genre en question déjà connues et définies ci-dessus, on a recours, en tant qu'agent tensio-actif, à un alcool gras polyéthoxylé et polyoxypropyléné particulier en C₈ à C₁₀ et, en tant qu'agent hydrotrope, à un benzène-, naphtalène- ou alcane-sulfonate particulier.

Il s'ensuit que la composition acide désinfectante conforme à l'invention, qui est à base d'acide phosphorique et éventuellement d'acide hydroxyacétique et qui comprend un agent tensio-actif ainsi qu'un agent hydrotrope, est caractérisée par le fait que l'agent tensio-actif est non ionique et répond à la formule: 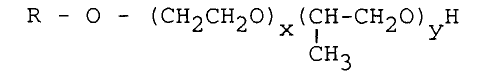 dans laquelle
R représente un radical alkyle en C₈ à C₁₀,
x représente un nombre entier de 1 à 15 et, de préférence, de 5 à 6, et
y représente un nombre entier de 3 à 10 et, de préférence, de 3 à 4,
et par le fait que l'agent hydrotrope est un hydrotrope anionique du groupe comprenant
- le naphthalènesulfonate, le méthyl-naphtalènesulfonate, le diméthyl-naphtalènesulfonate et le triméthylnaphtalènesulfonate ainsi que le mélange d'un ou plusieurs de ces composés,
- les benzènesulfonates du groupe d'acides comprenant l'acide toluènesulfonique, l'acide xylènesulfonique et l'acide diisopropylbenzènesulfonique, et
- les alcanesulfonates linéaires ou ramifiés en C₁ à C₁₈, de préférence en C₅ à C₁₈ et, plus préférentiellement encore, en C₈ à C₁₈.

Suivant un mode de réalisation avantageux, la susdite composition acide désinfectante comprend un cosolvant choisi dans le groupe comprenant des alcools, les glycols et les éthers de glycols.

En ce qui concerne les alcools susceptibles d'être retenus comme cosolvants, ils sont choisis parmi les alcools à chaîne courte en C₁ à C₈ et, de préférence, en C₂ ou C₃, comme par exemple l'éthanol, le n-propanol ou l'isopropanol.

Les éthers de glycol, quant à eux, sont choisis parmi les éthers méthylique, éthylique, butylique ou phénylique du propylène-, du dipropylène- ou du tripropyléneglycol; on peut également avoir recours aux mêmes éthers de l'éthylène- et du diéthylèneglycol (par exemple le NAPSOL de BP Chemicals et le DOWANOL de Dow Chemical).

Les compositions conformes à l'invention peuvent également comporter d'autres additifs qui permettent par exemple la limitation de la corrosion sur les supports sensibles aux pH acides, l'augmentation de la viscosité du produit final, la coloration de ces compositions; il est également possible de les parfumer pour les rendre plus agréables à l'usage.

Suivant un autre mode de réalisation avantageux, la teneur en agent tensio-actif non ionique de la susdite composition acide désinfectante est de 0,5 à 5% en poids et, de préférence, de 1 à 2% en poids.

Suivant un autre mode de réalisation, sa concentration en agent hydrotrope anionique est de 1 à 10% en poids, de préférence de 1 à 6% en poids.

Suivant un autre mode de réalisation avantageux de la susdite composition acide désinfectante, sa teneur en cosolvant est de 3 à 20% en poids et, de préférence, de 4 à 10% en poids.

Le procédé conforme à l'invention de nettoyage et de désinfection des installations de l'industrie agroalimentaire, notamment de la brasserie et de la laiterie, est caractérisé par le fait que l'on a recours à une solution aqueuse dont la concentration en composition conforme à l'invention est de 0,5 à 4% en poids.

L'invention vise encore d'autres dispositions qui résulteront plus particulièrement du complément de description qui suit et des exemples qui sont relatifs à des modes de réalisation avantageux.

Se proposant, par conséquent, de constituer une composition acide désinfectante propre pour la réalisation en une seule étape du nettoyage et de la désinfection des installations de l'industrie agroalimentaire et, plus particulièrement, de celles des industries de la brasserie et de la laiterie, on mélange, suivant les proportions indiquées ci-après, de l'acide phosphorique, de l'acide hydroxyacétique, au moins un agent tensio-actif non ionique du groupe de ceux indiqués plus haut et au moins un agent hydrotrope anionique également du groupe de ceux indiqués plus haut, lesdites proportions étant:

| | |
|---|---|
| acide phosphorique (à 100%) | 40 % à 65% en poids |
| acide hydroxyacétique | 0 % à 20% en poids |
| tensio-actif non ionique | 0,5% à 5% en poids |
| agent hydrotrope anionique | 2 % à 10% en poids |
| eau | q.s.p. 100%, |

les divers constituants étant apportés sous forme de leur solution dans l'eau, la composition résultante se présentant sous la forme d'un concentré.

Pour la préparation d'une composition acide désinfectante prête à l'emploi, on dilue le susdit concentré avec une quantité d'eau suffisante pour amener la teneur de la solution ainsi obenue en composition acide désinfectante conforme à l'invention à une valeur de 0,5 à 4% en poids.

Dans la pratique et compte tenu de la concentration indiquée plus haut en ses divers constituants de la composition acide désinfectante conforme à l'invention sous forme de concentré, il s'agit de diluer 1,5 partie en poids dudit concentré avec environ 100 parties en poids d'eau.

La possibilité d'effectuer le nettoyage et la désinfection en une étape et la suppression concomittante du rinçage intermédiaire permettent de ramener l'arrêt de l'installation à environ 40 minutes, ce qui est très important pour l'industriel.

Tant la nature de l'agent tensio-actif non ionique et celle de l'agent hydrotrope anionique que leurs proportions dans la composition acide désinfectante conforme à l'invention sont critiques, ainsi qu'il résulte des essais comparatifs dont il va être question dans certains des exemples qui suivent.

### EXEMPLE 1

### Importance de la nature de l'agent tensio-actif

Pour montrer l'importance du choix conforme à l'invention du tensio-actif entrant dans la constitution de la composition conforme à l'invention, il a été procédé aux cinq expériences décrites ci-après.

Dans la formulation suivante:

| | |
|---|---|
| acide phosphorique (à 100%) | 58,5% en poids |
| butylglycol | 5 % en poids |
| méthylnaphtalènesulfonate (hydrotrope anionique) | 6 % en poids |
| agent tensio-actif | 1 % en poids |
| eau | q.s.p. 100 %, |

on a eu recours, dans les cinq expériences en question, successivement aux tensio-actifs suivants:
- acétal mixte de formule AO-CH₂-OCH₃ (brevet français N° 1.600.907) commercialisé sous la dénomination "UKANIL" par la Société I.C.I.
- octylphénol-(OE)ₙ-OCH₂-C₆H₅ commercialisé sous la dénomination "TRITON CF 10" par la Société Röhm & Haas
- nonylphénol 4 OE commercialisé sous la dénomination "SYNTOPON A 100" par la Société Witco
- nonylphénol (OE)₁₀ (OP)₉ commercialisé sous la dénomination "MARLOX NP 109" par la Société Hüls
- alcool gras en C₈-C₁₀ (OE)5-6 (OP)3-4 commercialisé sous la dénomination "TRITON DF 16" par la Société Röhm & Haas.

Le cinquième de ces cinq agents tensio-actifs est un alcool gras de la famille de ceux retenus conformément à l'invention.

Les cinq formulations ainsi obtenues ont été testées du point de vue de leur efficacité sur des levures du type Saccharomyces Cerevisiae en procédant conformément à la norme AFNOR NF T 72 201.

Les efficacités notées successivement avec les quatre compositions en question sont les suivantes:
5% pour la première,
5% pour la deuxième,
3% pour la troisième,
5% pour la quatrième et
≤ 2% pour la cinquième, c'est-à-dire pour la formulation conforme à l'invention.

Il résulte de ces essais comparatifs que la mise en oeuvre d'un alcool gras de la famille de ceux retenus conformément à l'invention à titre d'agents tensio-actifs non ioniques, présente une efficacité nettement supérieure à celle qu'il est possible d'enregistrer avec les compositions dans lesquelles sont utilisés des agents tensio-actifs différents.

### EXEMPLE 2

### Importance du choix conforme à l'invention d'un hydrotrope anionique de la famille des acides aryl- ou alkylarylsulfoniques définis ci-dessus.

On a testé le n-alcanesulfonate de sodium en C₈ mis en oeuvre au sein de la composition suivante:

| | |
|---|---|
| Acide phosphorique (à 100%) | 58,5 % en poids |
| n-alcanesulfonate de sodium en C₈ | 6 % en poids |
| alcool gras en C₈-C₁₀(OE)₅₋₆(OP)₃₋₄ | 1 % en poids |
| butylglycol | 5 % en poids |
| additif anti-corrosion et anti-mousse | 2 % en poids |
| eau | q.s.p. 100%. |

Le n-alcanesulfonate de sodium en C₈ utilisé peut être celui commercialisé par la Société STEPAN sous la désignation BIOTERGE PAS 8 SF (solution aqueuse à 40% de sulfonate) et l'alcool gras en C₈-C₁₀ peut être celui commercialisé par UNION CARBIDE sous l'appellation TRITON DF 16.

L'efficacité de cette composition sur bactéries a été testée conformément à la norme NF T 72 171 en eau dure à 30 degrés hydrotimétriques français.

Les résultats obtenus sont les suivants:

| | |
|---|---|
| Streptococcus faecalis | ≤ 0,5 % |
| Staphylococcus aureus | = 0,5 % |
| Escherichia coli | = 0,25 % |
| Pseudomonas aeruginosa | ≤ 0,1 %. |

### EXEMPLE 3

### Importance de la proportion de l'agent hydrotrope choisi conformément à l'invention.

L'efficacité de la composition conforme à l'invention sur levure Saccharomyces Cerevisiae, a été établie d'après la norme NF T 72 201 (temps de contact 15 minutes, eau dure 30 degrés hydrotimétriques) en fonction de la proportion d'agent hydrotrope conforme à l'invention.

Deux séries de cinq compositions conformes à l'invention ont été testées.

Les proportions des différents constituants de chacune de ces deux séries de compositions apparaissent respectivement dans les tableaux I et Il ci-après.

Dans ces tableaux, on a fait apparaître les résultats des essais d'efficacité selon la norme NF T 72 201.

**TABLEAU I**

| | A | B | C | D | E |
|---|---|---|---|---|---|
| Acide phosphorique (à 100%) | 58,5 | 58,5 | 58,5 | 58,5 | 58,5 |
| | | | | | |
| Alcool gras C₈-C₁₀ (OE)5-6 (OP)3-4 (commercialisé sous la dénomination TRITON DF 16 par Union Carbide) | 1 | 1 | 1 | 1 | 1 |
| | | | | | |
| Méthyl-naphtalènesulfonate de Na (commercialisé sous la dénomination PETRO 11 par Petro Chemical) | 1 | 2,5 | 4,5 | 6 | 8 |
| | | | | | |
| Ether n-butylique d'éthylèneglycol | 5 | 5 | 5 | 5 | 5 |
| | | | | | |
| Efficacité sur levure Saccharomyces Cerevisiae (Norme NF T 72 201) | 5% | >3% | 3% | <2% | <2% |

**TABLEAU II**

| | A | B | C | D | E |
|---|---|---|---|---|---|
| Acide phosphorique (à 100%) | 58,5 | 58,5 | 58,5 | 58,5 | 58,5 |
| | | | | | |
| Alcool gras C₈-C₁₀ (OE)5-6 (OP)3-4 (commercialisé sous la dénomination TRITON DF 16 par Union Carbide) | 1 | 1 | 1 | 1 | 1 |
| | | | | | |
| n-alcanesulfonate de sodium en C₈ (matière active introduite sous forme de solution aqueuse à 40%, commercialisée par la Société Stepan sous la désignation BIOERGE PAS 8 SF | 2 | 4 | 5 | 6 | 7 |
| | | | | | |
| Ether n-butylique d'éthylèneglycol | 5 | 5 | 5 | 5 | 5 |
| | | | | | |
| Eau q.s.p. | 100 | 100 | 100 | 100 | 100 |
| Efficacité sur levure Saccharomyces Cerevisiae (Norme NF T 72 201) | 4% | 3% | 3% | 2% | 2% |

Il résulte des essais rappelés ci-dessus que, dans les deux cas, la proportion la plus efficace d'agent hydrotrope anionique est de 6% en poids.

### EXEMPLE 4

On a testé les trois autres alcanesulfonates identifiés dans le tableau III ci-après en utilisant la formulation indiquée à l'exemple 1 dans laquelle le tensio-actif est constitué par l'alcool gras de formule C₈-C₁₀ (OE)₅₋₆(OP)₃₋₄, la teneur en matière active hydrotrope anionique étant maintenue dans tous les cas à 6% en poids.

Dans ce tableau est également indiquée l'efficacité des trois alcanesulfonates sur Saccharomyces Cerevisiae déterminée d'après la norme NF T 72 201.

**TABLEAU III**

| Alcanesulfonate | Efficacité sur levure Saccharomyces Cerevisiae Norme NF T 72 201 |
|---|---|
| Alcanesulfonate secondaire de sodium en C₁₃-C₁₇ (C₁₃-C₁₅ = 59% . C₁₆-C₁₇ = 39%) Matière active introduite sous forme de solution aqueuse à 65%, commercialisée par la Société Hüls sous la dénomination MARLON PS 65 | inférieure ou égale à 1% |
| Propane-1 sulfonate de sodium à 99% (référence 35895-9) commercialisé par la Société Aldrich | supérieure à 5% |
| Butane-1 sulfonate de sodium à 98% (référence 22151/1) commercialisé par la Société Aldrich | supérieure à 5% |

### EXEMPLE 5

Un essai de nettoyage-désinfection a été réalisé sur des cuves de fermentation en acier inoxydable d'une capacité de 60 m³.

Pour cet essai, il a été utilisé un dispositif automatique de lavage du type "CIP mobile".

Le nettoyage a été effectué à froid sous atmosphère de CO₂ en respectant le programme suivant:
- prélavage à l'eau (environ 20 hl d'eau en 5 pompages suivis chacun d'une mise à l'égout),
- lavage par mise en oeuvre d'un produit obtenu à partir d'une composition conforme à l'invention, celle-ci étant diluée à raison de 1,5% en poids dans l'eau (quantité de produit utilisé: environ 6 hl) pendant 20 minutes,
- rinçage identique au prélavage.

La composition conforme à l'invention à partir de laquelle a été obtenu le produit de lavage à 1,5% en poids de ladite composition, a la constitution suivante:

| | |
|---|---|
| Acide phosphorique (à 100%) | 58,5% en poids |
| Acide hydroxyacétique (à 100%) | 6 % en poids |
| Agent hydrotrope anionique selon l'invention | 6 % en poids |
| Agent tensio-actif non ionique selon l'invention | 1 % en poids |
| Butylglycol | 5 % en poids |
| Eau | q.s.p. 100%. |

Le résultat de cet essai est le suivant:
- la détergence est bonne dans les conditions de l'essai,
- les résultats du point de vue bactériologique, c'est-à-dire la détermination de la flore aérobie mésophile totale sur les eaux d'égouttage, ont montré qu'il y avait moins d'un microorgenisme par 10 ml.

L'arrêt de l'installation a été de 40 minutes environ.

## Revendications

1. Composition acide désinfectante à base d'acide phosphorique et éventuellement d'acide hydroxyacétique comprenant un agent tensio-actif ainsi qu'un agent hydrotrope, caractérisée par le fait que l'agent tensio-actif est non ionique et répond à la formule: 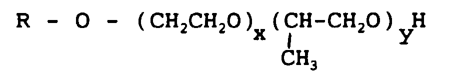 dans laquelle
R représente un radical alkyle en C₈ à C₁₀,
x représente un nombre entier de 1 à 15 et, de préférence, de 5 à 6, et
y représente un nombre entier de 3 à 10 et, de préférence, de 3 à 4,
et par le fait que l'agent hydrotrope est un hydrotrope anionique du groupe comprenant
- le naphthalènesulfonate, le méthyl-naphtalènesulfonate, le diméthyl-naphtalènesulfonate et le triméthylnaphtalènesulfonate ainsi que le mélange d'un ou plusieurs de ces composés,
- les benzènesulfonates du groupe d'acides comprenant l'acide toluènesulfonique, l'acide xylènesulfonique et l'acide diisopropylbenzènesulfonique, et
- les alcanesulfonates linéaires ou ramifiés en C₁ à C₁₈, de préférence en C₅ à C₁₈ et, plus préférentiellement encore, en C₈ à C₁₈.

2. Composition selon la revendication 1, caractérisée par le fait qu'elle comprend un cosolvant choisi dans le groupe comprenant des alcools, les glycols et les éthers de glycols.

3. Composition selon l'une des revendications 1 et 2, caractérisée par le fait que sa teneur en agent tensioactif non ionique est de 0,5 à 5% en poids et, de préférence, de 1 à 2% en poids.

4. Composition selon l'une des revendications 1 à 3, caractérisée par le fait que sa concentration en agent hydrotrope anionique est de 1 à 10% en poids, de préférence de 1 à 6% en poids.

5. Composition selon l'une des revendications 2 à 4, caractérisée par le fait que sa teneur en cosolvant est de 3 à 20% et, de préférence, de 4 à 10% en poids.

6. Procédé de nettoyage et de désinfection des installations de l'industrie agroalimentaire, notamment de la brasserie et de la laiterie, caractérisé par le fait que l'on a recours à une solution aqueuse dont la concentration en composition selon l'une des revendications 1 à 5 est de 0,5 à 4% en poids.

## Patentansprüche

1. Saure Desinfektionsmittel-Zusammensetzung, basierend auf Phosphorsäure und gegebenenfalls Hydroxyessigsäure, umfassend ein oberflächen aktives Mittel sowie ein hydrotropes Mittel,
dadurch gekennzeichnet,
daß das oberflächen aktive Mittel nicht ionisch ist und der Formel entspricht: 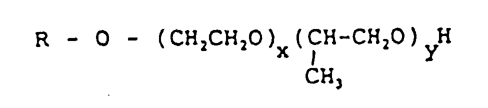 worin
R ein Alkylrest von C₈ bis C₁₀ ist,
x eine ganze Zahl von 1 bis 15 und, vorzugsweise von 5 bis 6 ist und
y eine ganze Zahl von 3 bis 10 und, vorzugsweise von 3 bis 4 ist,
und
dadurch gekennzeichnet,
daß das hydrotrope Mittel ein anionisches Hydrotrop der Gruppe ist, umfassend
- Naphthalinsulfonat, Methylnaphthalinsulfonat, Dimethylnaphathalinsulfonat und Trimethylnaphthalinsulfonat sowie eine Mischung einer oder mehrerer dieser Stoffe,
- Benzolsulfonate der Gruppe von Säuren, umfassend Toluolsulfonsäure, Xylolsulfonsäure und Diisopropylbenzolsulfonsäure und
- geradkettige oder verzweigte Alkansulfonate mit Resten von C₁ bis C₁₈, vorzugsweise von C₅ bis C₁₈ und stärker bevorzugt von C₈ bis C₁₈.

2. Zusammensetzung nach Anspruch 1,
dadurch gekennzeichnet,
daß sie ein Colösungsmittel, ausgewählt aus der Gruppe, umfassend Alkohole, Glykole und Etherglykole umfaßt.

3. Zusammensetzung nach einem der Ansprüche 1 und 2,
dadurch gekennzeichnet,
daß ihr Gehalt an nicht ionischem oberflächen aktivem Mittel von 0,5 bis 5 Gew.-% und vorzugsweise von 1 bis 2 Gew.-% beträgt.

4. Zusammensetzung nach einem der Ansprüche 1 bis 3,
dadurch gekennzeichnet,
daß ihre Konzentration von anionischen hydrotropem Mittel von 1 bis 10 Gew.-%, vorzugsweise von 1 bis 6 Gew.-% beträgt.

5. Zusammensetzung nach einem der Ansprüche 2 bis 4,
dadurch gekennzeichnet,
daß ihr Gehalt von Colösungsmittel von 3 bis 20 Gew.- % und vorzugsweise von 4 bis 10 Gew.-% beträgt.

6. Verfahren zur Reinigung und Desinfektion von Anlagen der Agrarindustrie, insbesondere des Brauerei- und Molkereiwesens,
dadurch gekennzeichnet,
daß man eine wäßrige Lösung verwendet, umfassend eine Zusammensetzung nach einem der Ansprüche 1 bis 5 in einer Konzentration von 0,5 bis 4 Gew.-%.

## Claims

1. Acidic disinfectant compound on a base of phosphoric acid and if necessary of hydroxyacetic acid, comprising a surfactant agent and a hydrotropic agent, characterised in that the surfactant agent is non-ionic, and corresponds to the formula: 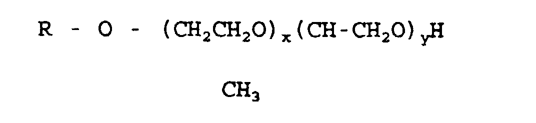 in which
R represents an alkyl radical of C₃ to C₁₀,
x represents a whole number from 1 to 15 and preferably from 5 to 6, and
y represents a whole number from 3 to 10 and preferably from 3 to 4,
and in that the hydrotropic agent is an anionic hydrotrope of the group comprising
• naphthalene sulphonate, methyl-naphthalene sulphonate, dimethyl-naphthalene sulphonate and trimethyl-naphthalene sulphonate as well as the mixture of one or more of these compounds;
• benzene sulphonates of the group of acids comprising toluene sulphonic acid,
• xylene sulphonic acid and diisopropylbenzene sulphonic acid, and
• linear or branched alcane sulphonates of C₁ to C₁₈, preferably C₅ to C₁₅, more preferably C₈ to C₁₈.

2. Compound according to claim 1, characterised in that it comprises a co-solvent selected from the group comprising alcohols, glycols and glycol ethers.

3. Compound according to one of claims 1 and 2, characterised in that its non-ionic surfactant content is from 0.5 to 5% by weight and preferably from 1 to 2% by weight.

4. Compound according to one of claims 1 to 3, characterised in that its concentration of hydrotropic agent is from 1 to 10% by weight, preferably from 1 to 6% by weight.

5. Composition according to one of claims 2 to 4, characterised in that its co-solvent content is from 3 to 20% and preferably from 4 to 10% by weight.

6. Method of cleaning and disinfecting installations in the agricultural foodstuffs industry, particularly in brewing and dairy installations, characterised in that an aqueous solution is used whose concentration of the compound according to one of claims 1 to 5 is from 0.5 to 4% by weight.
